(19)

**Europäisches Patentamt**
**European Patent Office**
**Office européen des brevets**

(11) **EP 4 309 783 A1**

(12) **EUROPEAN PATENT APPLICATION**

(43) Date of publication:
**24.01.2024 Bulletin 2024/04**

(21) Application number: **22382704.9**

(22) Date of filing: **22.07.2022**

(51) International Patent Classification (IPC):
**B01J 20/22** (2006.01)     **B01J 20/30** (2006.01)
**C02F 1/28** (2023.01)     **C02F 1/72** (2023.01)
**B01J 31/16** (2006.01)

(52) Cooperative Patent Classification (CPC):
**B01J 20/226; B01J 20/3085; B01J 31/1691;**
**B01J 31/2239; C02F 1/30; C02F 1/725;**
C02F 2101/30; C02F 2305/10

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **Universidad Autónoma de Madrid**
  **28049 Madrid (ES)**
• **Consejo Superior de Investigaciones Científicas**
  **(CSIC)**
  **28006 Madrid (ES)**

(72) Inventors:
• **Gómez-Avilés, Almudena**
  **Madrid (ES)**
• **Rodríguez Solís, Rafael**
  **Madrid (ES)**
• **García Frutos, Eva María**
  **Madrid (ES)**
• **Bedia, Jorge**
  **Madrid (ES)**
• **Belver, Carolina**
  **Madrid (ES)**

(74) Representative: **Pons**
**Glorieta Rubén Darío 4**
**28010 Madrid (ES)**

(54) **MODIFIED UIO-66-NH2 MATERIAL, ITS PREPARATION PROCEDURE AND THE USE THEREOF**

(57)     The invention relates to novel Metal Organic Frameworks (MOFs) comprising a modified UiO-66-NH$_2$, which consist of a *N*-cycloalkyl functionalized UiO-66-NH$_2$. The invention also relates to the procedure to prepare them and the use thereof as a photocatalysts.

**EP 4 309 783 A1**

**Description**

The invention relates to novel Metal Organic Frameworks (MOFs) comprising a modified UiO-66-NH$_2$. Specifically, said modified material refers to a *N*-cycloalkyl functionalized UiO-66-NH$_2$. The invention also relates to the procedure to prepare them and the use thereof as photocatalysts.

**BACKGROUND ART**

Metal Organic Frameworks represent a new generation of crystalline materials constructed by polymeric coordinated bindings between an inorganic secondary building unit, namely metal clusters, and organic molecules acting as linkers [J. Gascon, A. Corma, F. Kapteijn, F.X. Llabrés I Xamena, Metal organic framework catalysis: quo vadis?, ACS Catal. 4 (2014) 361-378]. Multiple organic molecules can serve as the linker, the most popular being carboxylates, phosphonates, sulfates, azole, and heterocyclic compounds. The modification of the linker enables the modulation of the structure, porosity and electronic properties of the MOF, enlarging their potential applications. Among them, currently, it is under research their application in gas storage, such as hydrogen and carbon dioxide, gas separation, water remediation, catalysis in a wide range of reactions, energy storage, drug delivery or sensing. Within heterogeneous catalysis, photocatalysis is a potential application of MOFs since the early 2000's due to their semiconductor properties. Degradation of organic molecules, hydrogen production, CO$_2$ reduction and water oxidation are examples of photocatalytic processes. Essentially, photocatalysis is based on the conversion of light into chemical energy. It is considered an environmentally friendly technology because it only requires a light source and a solid semiconductor and can operate under mild ambient-like conditions. One of the most important driving forces that currently supports the use of photocatalysis is the possibility of using solar radiation as a light source. Sunlight, like renewable energy, represents a cost-effective and green alternative with the highest feasible potential. Thus, MOFs have gained attention in solar photocatalysis since MOFs activate by irradiation transferring electrons from the organic linker to the partially filled d-orbitals of the metal cluster by a mechanism known as ligand-to-metal charge transfer (LMCT). Among the most used MOFs are Fe-based (as MIL-53, -88 and -101), Ti-(MIL-125), Zr- (UiO-66) and Zn-MOFs (ZIF-8), and all their derivatives to enhance the solar light harvesting and stability.

The zirconium-based UiO-66 MOF [J.H. Cavka, S. Jakobsen, U. Olsbye, N. Guillou, C. Lamberti, S. Bordiga, K.P. Lillerud, A new zirconium inorganic building brick forming metal organic frameworks with exceptional stability, J. Am. Chem. Soc. 130 (2008) 13850-13851] is the scaffolding resulted from the combination of the cubic framework of cationic Zr$_6$O$_4$(OH)$_4$ nodes and terephthalic acid molecules as linker, concretely, via 12-coordinated bonds [J. Winarta, B. Shan, S.M. Mcintyre, L. Ye, C. Wang, J. Liu, B. Mu, A Decade of UiO-66 Research: A Historic review of dynamic structure, synthesis mechanisms, and characterization techniques of an archetypal Metal-Organic Framework, Cryst. Growth Des. 20 (2020) 1347-1362]. This high coordination has been proved to make UiO-66 very stable under a wide range of thermal conditions and diverse types of solvents, water included. Zr-based MOFs have shown exceptional stability against water because of the strong Zr-O bond and a specific geometry that hinders the inclusion of water molecules to mitigate the hydrolysis reactions. Moreover, the Zr$_6$-cluster can be reversibly rearranged upon removal or addition of hydroxyl groups, without any changes in the connecting carboxylates [J.H. Cavka, S. Jakobsen, U. Olsbye, N. Guillou, C. Lamberti, S. Bordiga, K.P. Lillerud, A new zirconium inorganic building brick forming metal organic frameworks with exceptional stability, J. Am. Chem. Soc. 130 (2008) 13850-13851]. Based on the exceptional stability of the UiO-66 structure, diverse modifications on the linker have extended the UiO-66 family.

From the diverse attempts of functionalization the aromatic ring of the terephthalate linker tested to the date [ Y.L. Wang, S. Zhanb, Y.F. Zhab, J. Bedia, J.J. Rodriguez, C. Belver, UiO-66 based metal organic frameworks for the photodegradation of acetaminophen under simulated solar irradiation, J. Environ. Chem. Eng. 9 (2021) 106087], the 2-aminoterephthalic acid (ATA) has been used to enhance the light harvesting of the MOF [X. Chen, Y. Cai, R. Liang, Y. Tao, W. Wang, J. Zhao, X. Chen, H. Li, D. Zhang, NH2-UiO-66(Zr) with fast electron transfer routes for breaking down nitric oxide via photocatalysis, Appl. Catal. B Environ. 267 (2020) 118687]. The further functionalization of the amino group in ATA has recently been reported with very good results in MIL-125(Ti)-NH$_2$ [M.W. Logan, S. Ayad, J.D. Adamson, T. Dilbeck, K. Hanson, F.J. Uribe-Romo, Systematic variation of the optical bandgap in titanium based isoreticular metal-organic frameworks for photocatalytic reduction of CO2 under blue light, J. Mater. Chem. A. 5 (2017) 11854-11863] as a photocatalyst.

However, although the use of some zirconium-based UiO-66 MOF as a photocatalyst has been previously reported, it would be desirable to have new photocatalysts more effective and efficient than those known in the prior art. With this aim, the present invention proposes new zirconium-based UiO-66 MOFs, which are highly effective as photocatalysts, mainly in the degradation of contaminants in water using only solar radiation.

**SUMMARY OF THE INVENTION**

In the present invention, several *N*-cycloalkyl-amino functionalized UiO-66-NH$_2$ have been prepared. In particular, two *N*-cycloalkyl-amino modified linkers have been synthesized, ATA-cyclopentyl (ATA-C$_5$) and ATA-cyclohexyl (ATA-C$_6$) for preparing their Zr-MOFs versions, called UiO-66-NH-C$_5$ and UiO-66-NH-C$_6$, respectively.

The prepared materials have been fully characterized by diverse techniques, with special attention to the electrochemical and optical properties. Next, the benefits of the *N*-cycloalkyl functionalization were proved for the photocatalytic degradation under simulated solar radiation of a contaminant of emerging concern in water, i.e. acetaminophen, which is frequently reported in sewage effluents. The study also analyses the photocatalytic performance of the novel *N*-cycloalkyl functionalized UiO-66-NH$_2$, confirming its remarkable enhancement and stability.

A first aspect of the present invention relates to a metal-organic framework (MOF) comprising or consisting of *N*-cycloalkyl functionalized UiO-66-NH$_2$ wherein the cycloalkyl substituent is selected from cyclopentyl and cyclohexyl.

The material UiO-66-NH$_2$ is a known zirconium-based MOF that consists of the scaffolding resulting from the combination of the cubic framework of cationic Zr$_6$O$_4$(OH)$_4$ nodes and 2-aminoterephthalic acid molecules as linkers, concretely, via 12-coordinated bonds. It is commercially available (CAS No. 1260119-00-3) and also is called zirconium aminobenzenedicarboxylate MOF. Its synthesis and different properties have been already reported in literature [T. Musho, J. Li, N. Wu, Band gap modulation of functionalized metal-organic frameworks, Phys. Chem. Chem. Phys. 16 (2014) 23646-23653].

Herein, "*N*-cycloalkyl functionalized UiO-66-NH$_2$" is a modified UiO-66-NH$_2$ wherein the -NH$_2$ group has been functionalized by a cycloalkyl selected from cyclopentyl and cyclohexyl. Then, said modified UiO-66-NH$_2$ comprises or consists of the scaffolding resulting from the combination of the cubic framework of cationic Zr$_6$O$_4$(OH)$_4$ nodes and *N*-cycloalkyl-2-aminoterephthalic acid molecules as linkers, concretely, via 12-coordinated bonds, wherein the cycloalkyl substituent is selected from cyclopentyl and cyclohexyl.

In a preferred embodiment, the MOF comprises or consists of *N*-cyclopentyl functionalized UiO-66-NH$_2$.

In a preferred embodiment, the MOF of the present invention is a porous material having a BET surface area from 300 to 700 m$^2$·g$^{-1}$.

BET surface area is measured by the Brunauer-Emmett-Teller (BET) method, based on the nitrogen adsorption isotherm measurements at -196 ºC using the data in the relative pressure range from 0.05 to 0.3. This method assumes multilayer adsorption of nitrogen on the adsorbent's surface.

In a preferred embodiment, the MOF of the present invention comprises micropores with a micropore volume from 35 to 60 %, having a diameter within 1.0-1.5 nm, as measured by the t-plot method from the nitrogen adsorption-desorption isotherms. This methodology determines the micro- and/or mesoporous volumes of a sample from the nitrogen adsorption data by comparison with a reference adsorption isotherm of a nonporous material having the same surface chemistry.

A second aspect of the invention refers to the procedure to prepare the metal-organic framework described in the first aspect of the invention. The procedure comprises the next steps:

   a) synthesis of *N*-cycloalkyl-2-aminoterephthalate dimethyl ester by contacting 2-aminoterephthalate dimethyl ester with the corresponding cyclic ketone (cyclopentanone or cyclohexanone) in presence of trimethylsilyl chloride (TMS-Cl), adding NaBH$_4$ at 0 ºC to the mixture of reaction and, after 2 to 10 min (preferably 5 min) of the addition of NaBH$_4$, warming up said mixture to room temperature (20-25 ºC) and mantaining the mixture at said temperature for 2 to 4 h, preferably 2.5 h.

   b) synthesis of *N*-cycloalkyl-2-aminoterephthalic acid by treating the N-cycloalkyl-2-aminoterephthalate dimethyl ester obtained in step a) with NaOH, preferably 1M, at a temperature between 60 and 80 ºC for 6-10 h. The mixture was concentrated to remove the solvent, and the resulting mixture is acidified and the precipitate formed, which contains the *N*-cycloalkyl-2-aminoterephthalic acid, is collected,

   c) synthesis of the *N*-cycloalkyl-amino functionalized UiO-66-NH$_2$ (MOFs described in the first aspect of the invention) by contacting the *N*-cycloalkyl-2-aminoterephthalic acid obtained in step b) (the precipitate) with ZrOCl$_2$·8 H$_2$O in presence of acetic acid and HCl in a vessel hermetically closed and heated at a temperature between 130 and 150 ºC for 14-20 h.

In a preferred embodiment, step a) is carried out under N$_2$ atmosphere.

In a preferred embodiment, DMF is used as a solvent in step a) and/or in step b).

In a preferred embodiment, the product obtained in step a) is extracted with ethyl acetate after quenching with a solution of saturated NaHCO$_3$.

In a preferred embodiment, for each mmol of 2-aminoterephthalate dimethyl ester used in step a), between 1 and 2mmol of cyclic ketone and/or between 2 and 3 mmol of trimethylsilyl chloride (TMSCl) and/or between 1 and 1.5 mmol of NaBH$_4$ are used.

In a preferred embodiment, the step b) is carried out at 70 °C and/or for 8 h.

In a preferred embodiment, THF is used as a solvent in step b).

In a preferred embodiment, the molar proportion between NaOH and cycloalkyl-2-aminoterephthalate dimethyl ester in step b) is between 7 and 8

In a preferred embodiment, in step b) the mixture is acidified until pH=3, preferably adding HCl.

In a preferred embodiment, the precipitate in step b) is isolated by filtration, washed with water, and dried.

In a preferred embodiment, step c) is carried out at 140 ºC and/or for 16 h.

In a preferred embodiment, equimolar quantities of *N*-cycloalkyl-2-aminoterephthalic acids and ZrOCl$_2$·8 H$_2$O are used in step c).

In a preferred embodiment, DMF is used as a solvent in step c).

In a preferred embodiment, the solid product obtained in step c) is recovered by centrifugation.

The present invention also refers to the MOFs obtained by the method previously described.

A last aspect of the invention refers to the use of the MOFs described in the first aspect of the invention as a photocatalyst.

A preferred embodiment refers to the use of the MOF described in the first aspect of the invention as a photocatalyst in the degradation of organic contaminants in water.

As used herein, the term "organic contaminants" is intended to refer to all organic compounds which present environmental hazards when permitted to remain in the water. Examples of "organic contaminants" in water are pharmaceuticals and pesticides.

The term "pharmaceutical" is intended to include human and animal medications, pharmaceutical drugs, and nutraceuticals.

In a preferred embodiment, this degradation is carried out in presence of solar light as an energy source, more preferably in presence of solar light as the only energy source.

In a preferred embodiment, the organic contaminant is a pharmaceutical, more preferably, acetaminophen (ACE).

In another preferred embodiment, the organic contaminant is a pesticide.

The MOFs of the present invention have photocatalytic applications for the removal of pollutants using solar radiation. The use of solar radiation as a renewable energy source is a great step forward in developing environmentally sustainable technologies. Its possible use in the treatment of polluted effluents is a great challenge, which requires the development of efficient and stable photocatalysts capable of inducing reactions for the oxidation of pollutants using only solar radiation. The stability and high activity of the photocatalysts of the present invention would even allow their application in continuous water treatment while maintaining the use of solar radiation, which would be of great interest for the use of water resources. Compared to other photocatalysts used for the degradation of emerging pollutants in water, the materials of the present invention achieve better use of solar radiation as well as high conversion values and excellent stability.

Some of the technical advantages of the MOFs of the present over known products of the UiO-66 family are the following:

i. Lower band gap value, the energy separation between the valence band and the conduction band of a semiconductor that allows absorbing light of different wavelengths.

ii. Light absorption capability in the visible region of the solar spectrum, shifted to longer wavelengths compared to UiO-66-NH$_2$.

iii. Lower resistance to charge transfer when in contact with an electrolyte, favouring the mobility of charges within the electrolyte.

iv. Higher photocatalytic activity in the degradation of pharmaceuticals in water, higher kinetic constant and conversion values.

Unless otherwise defined, all technical and scientific terms herein used have the same meaning as commonly understood by one ordinary skilled in the art to which this invention belongs. Methods and materials similar or equivalent to those described herein can be used in the practice of the present invention. Throughout the description and claims, the word "comprise" and its variations are not intended to exclude other technical features, additives, components, or steps. Additional objects, advantages, and features of the invention will become apparent to those skilled in the art upon examination of the description or may be learned by practice of the invention. The following examples and drawings are provided by way of illustration and are not intended to be limited to the present invention.

## DESCRIPTION OF THE DRAWINGS

**Fig. 1.** Scheme of the synthesis of the *N*-cycloalkyl-2-aminoterephthalic acids and the amino-functionalized UiO-66-NH$_2$. The substituent R represents cyclopentyl or cyclohexyl. The simplified final structure of the amino function-

alized UiO-66-NH$_2$ shows the organic linker joined to two Zn nodes.

**Fig. 2.** Graph showing powder X-Ray Diffraction (XRD) patterns of all samples.

**Fig. 3.** Graph of $^{13}$C solid-state NMR spectra of bare and *N*-cycloalkylfunctionalized UiO-66-NH$_2$ samples.

**Fig. 4.** Scanning electron microscopy (SEM) pictures of UiO-66-NH$_2$ (A), UiO-66-NH-C$_5$ (B), and UiO-66-NH-C$_6$.

Fig. 5. Graph showing N$_2$ adsorption-desorption isotherms and pore size distribution (inlet).

**Fig. 6.** UV-visible diffuse reflectance spectroscopy (DRS) absorption spectra (A) and the corresponding Tauc plots for the calculation of their bandgap energy (B).

**Fig. 7.** Graph showing time-course evolution of the normalized concentration of ACE during the photocatalytic degradation (A) and their corresponding pseudo-first order rate constants (B). *(V = 250 mL; $C_{ACE}$ = 5 mg·L$^{-1}$, $C_{CAT}$ = 250 mg·L$^{-1}$; T = 25 ºC, $pH_0$= 4.2 $\pm$ 0.2).*

**Fig. 8.** Electrochemical impedance spectroscopy (EIS) Nyquist plots.

**Fig. 9.** (A) Proposed bands alignment. (B) Scavengers influence on the time-course normalized concentration of ACE with UiO-66-NH-C$_5$ and (C) their corresponding pseudo-first order rate constant *(V= 250 mL; $C_{ACE}$ = 5mg·L$^{-1}$, $C_{CAT}$= 250 mg·L$^{-1}$; T = 25 °C, $pH_0$= 4.0 $\pm$ 0.2).*

**Fig. 10.** (A) Linker leaching of UiO-66-NH-C$_5$ and UiO-66-NH-C$_6$ *(V= 250 mL; $C_{ACE}$ = 5 mg·L$^{-1}$, $C_{CAT}$= 250 mg·L$^{-1}$; T = 25 °C, $pH_0$= 4.0 $\pm$ 0.2).* (B) ACE photocatalytic conversion with UiO-66-NH-C$_5$ at 3 h during sequential recycling uses.

**Fig. 11.** Proposed photocatalytic degradation pathway of ACE with UiO-66-NH-C$_5$

**Examples**

**Example 1: Synthesis of *N*-cycloalkyl functionalized UiO-66-NH$_2$, characterization and Photocatalytic test**

**1. EXPERIMENTAL SECTION**

**1.1. Chemicals**

All chemicals used were analytical grade at least, acquired from Merck® and used without further purification. Silica gel on TLC Al foils, type 60 with fluorescent indicator 254 nm, was purchased from Sigma-Aldrich. HPLC grade acetonitrile, solvents and silica gel 60 were acquired from Scharlab. Aqueous solutions were prepared with ultrapure water with a resistivity of 18.2 MΩ·cm.

**1.2. Synthesis of *N*-cycloalkyl functionalized UiO-66-NH$_2$ (UiO-66-NH-C$_5$ and UiO-66-NH-C$_6$)**

*1.2.1. Synthesis of N-cycloalkyl-2-aminoterephthalate dimethyl ester*

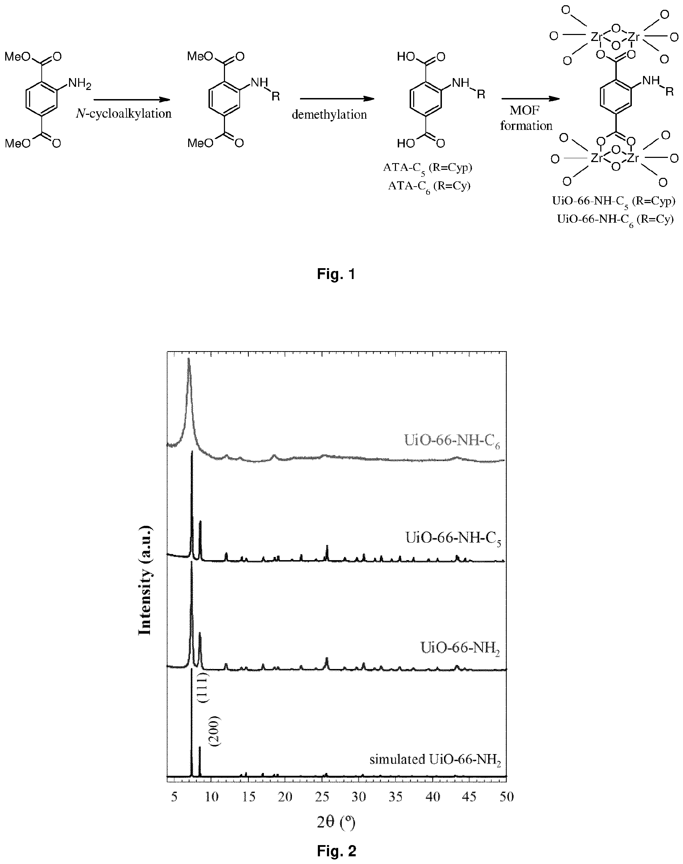

The synthesis of *N*-cycloalkyl-2-aminoterephthalate dimethyl esters was performed following a previous work [M.W. Logan, S. Ayad, J.D. Adamson, T. Dilbeck, K. Hanson, F.J. Uribe-Romo, Systematic variation of the optical bandgap in titanium based isoreticular metal-organic frameworks for photocatalytic reduction of CO2 under blue light, J. Mater. Chem. A. 5 (2017) 11854-11863], see steps in **Figure 1.** Under N$_2$ atmosphere, 2-aminoterephthalate dimethyl ester was suspended in anhydrous *N,N*-dimethylformamide (DMF), and stirred until complete dissolution. After, trimethylsilyl chloride (TMSCI) and the corresponding cyclic ketone (cyclopentanone and cyclohexanone) were added to the above solution and the mixture cooled down to 0 ºC. Next, NaBH$_4$ was incorporated slowly over 5 min. The resulting mixture was warmed up to room temperature until 2.5 h. The mixture was then quenched with a solution of saturated NaHCO$_3$ and the resulting product was extracted with ethyl acetate. The organic fractions were washed thereafter with brine and dried over MgSO$_4$, filtered and the solvent was removed in a rotary evaporator.

*1.2.2. Synthesis of N-cycloalkyl-2-aminoterephthalic acids*

The *N*-cycloalkylated dimethyl ester obtained was dissolved in tetrahydrofuran (THF), followed by the addition of NaOH 1 M. The resultant solution was heated under stirring to 70 °C for 8 h. The mixture was concentrated in a rotary evaporator at 45 °C to remove the excess THF. The concentrated was cooled down to room temperature and HCl 1 M was added until set pH=3. The collected precipitate was isolated by filtration, washed with water, and dried. Two different *N*-cycloalkyl-2-aminoterephthalic acids were obtained i.e., the cyclopentyl (ATA-C$_5$) and the cyclohexyl (ATA-C$_6$) derivatives.

*1.2.3. Synthesis of the N-cycloalkyl-amino functionalized UiO-66-NH$_2$*

The MOF UiO-66-NH$_2$, the functionalized UiO-66-NH-C$_5$, and UiO-66-NH-C$_6$ were prepared by solvothermal method following an adapted synthesis from the literature [T.F. Chen, S.Y. Han, Z.P. Wang, H. Gao, L.Y. Wang, Y.H. Deng, C.Q. Wan, Y. Tian, Q. Wang, G. Wang, G.S. Li, Modified UiO-66 frameworks with methylthiol, thiol and sulfonic acid function groups: The structure and visible-light-driven photocatalytic property study, Appl. Catal. B Environ. 259 (2019) 118047]. Briefly, 1.5 mmol of the linker, i.e. ATA, ATA-C$_5$, or ATA-C$_6$, was dissolved in 43 mL of DMF and placed, under vigorous stirring, in a Teflon lined vessel of 75 mL. Then, 1.5 mmol of ZrOCl$_2$·8 H$_2$O was added to the above DMF solution. Next, 7 mL of acetic acid and 286 μL of HCl (37%) were added. After homogenization, the vessel was hermetically closed and heated at 140 ºC for 16 h. The crystallized yellowish solids were recovered by centrifugation (9000 rpm, 5 min) and washed twice with DMF and water. The resulting solids were dried under vacuum overnight (16 h, 80 ºC), collected, and ground.

**1.3. Materials characterization**

The powder X-ray diffraction (XRD) patterns were acquired on a Bruker D8 advance diffractometer equipped with a Cu Kα1 source and a Lynxeye XE-T detector, recording the 2θ range within 4-50º at the scan step of 1.8 min$^{-1}$. The software *Match!®* was used to process the XRD diffractograms and the XRD pattern of the UiO-66-NH$_2$ standard (CCDC-1405751) was simulated with Vesta®. $^{13}$C solid-state NMR spectra were acquired on a Bruker AV-400-WB spectrometer (100.61 MHz) using Kel-F plugged ZrO rotors at room temperature. Recording conditions were set as 10 kHz spinning frequency, 35 kHz spectral width, 3 ms contact time and 4 s relaxation time. Scanning electron microscopy (SEM) was performed on a Quanta 3D FEG (de FEI™ Company) and Hitachi S-4800 devices. The textural properties were assessed by N$_2$ adsorption-desorption at -196 ºC in a TriStar 123 apparatus (Micromeritics). The specific surface area was calculated by the BET method (S$_{BET}$), the t-plot method was used to determine the surface area of micropore (S$_{MP}$) and the volume of micropore (V$_{MP}$). Total pore volume (V$_T$) was calculated from the N$_2$ uptake at P/P$_0$=0.99. The optical properties were studied in a UV-visible diffuse reflectance spectroscopy (DRS) using a Shimadzu UV2600 spectrophotometer equipped with an integrating sphere. The bandgap of the resulting semiconductors was estimated by the Tauc plot method considering indirect transitions [Y.L. Wang, S. Zhanb, Y.F. Zhab, J. Bedia, J.J. Rodriguez, C. Belver, UiO-66 based metal organic frameworks for the photodegradation of acetaminophen under simulated solar irradiation, J. Environ. Chem. Eng. 9 (2021) 106087.], estimating the Kubelka-Munk function (F(R$_∞$)) and depicting (F(R$_∞$)·hv)$^{1/2}$ vs the energy of the absorbed photons [ P. Makula, M. Pacia, W. Macyk, How to correctly determine the band gap energy of modified semiconductor photocatalysts based on UV-Vis Spectra, J. Phys. Chem. Lett. 9 (2018) 6814-6817; M. Zeama, M. Morsy, S. Abdel-Azeim, M. Abdelnaby, A. Alloush, Z. Yamani, Photophysical and photocatalytic properties of structurally modified UiO-66, Inorganica Chim. Acta. 501 (2020) 119287]. The electrochemical properties of the different materials were conducted in a Metrohm Autolab potentiostat (PGSTAT204) using three-electrode (DropSens ITO10) inside a Methrom Faraday cage. A suspension of each sample (1 mg·mL$^{-1}$) was prepared in 0.5 M Na$_2$SO$_4$, as a supporting electrolyte (pH 6.90-7.2 at 25 ºC), and placed into the electrochemical cell. Electrochemical impedance spectroscopy (EIS) was registered by scanning the frequency range from 10$^5$ to 10$^{-1}$ Hz at a fixed potential of -1.2 V while the flat band potential (V$_{fb}$) was estimated by the Mott-Schottky plot applying a voltage within -1.5 and 0.4 V under a constant frequency of 100 Hz. This value was from the intersection of the tangent line with the abscissa axis (potential) in the representation of 1/C$^2$ (C, the capacitance of the semiconductor-electrolyte junction) vs applied potential (V) [ K. Gelderman, L. Lee, S.W. Donne, Flat-band potential of a semiconductor: using the mott-schottky equation, J. Chem. Educ. 84 (2007) 25]:

$$\frac{1}{C^2} = \frac{2}{\varepsilon \cdot \varepsilon_0 \cdot e \cdot N_D} - \left( V - V_{fb} - \frac{k \cdot T}{e} \right) \qquad (1)$$

where V$_{fb\,(NHE,\,pH)}$ means the flat band potential at the pH medium, $\varepsilon$ and $\varepsilon_0$ the permittivity of the semiconductor and the void, respectively; e the electron charge; k the Boltzmann's constant; and *T* the temperature. The conduction band potential (V$_{CB}$) can be calculated for the normal hydrogen electrode (NHE) at pH=7 following a Nernstian shift considering the redox potential of Ag/AgCl (ΔV$_{Ag/AgCl}$= 0.21 V) [T. Giannakopoulou, I. Papailias, N. Todorova, N. Boukos, Y. Liu, J. Yu, C. Trapalis, Tailoring the energy band gap and edges' potentials of g-C3N4/TiO2 composite photocatalysts for NOx removal, Chem. Eng. J. 310 (2017) 571-580]:

$$V_{CB} = V_{fb(Ag/AgCl,\,pH)} + \Delta V_{(Ag/AgCl,\,NHE)} - 0.059 \cdot (7 - pH) \qquad (2)$$

Finally, the valence band potential ($V_{VB}$) can be estimated accounting the bandgap energy ($E_g$) of the semiconductor as follows:

$$V_{VB} = V_{CB} + \frac{E_g}{e} \qquad\qquad (3)$$

**1.4. Photocatalytic tests**

The photocatalytic performance of the synthesized materials was evaluated in the abatement of acetaminophen (ACE) in water. For the degradation tests, a solar simulator Suntest XLS+ (ATLAS) equipped with a Xe lamp and emitting at 600 W·m$^{-2}$ radiation over 320 nm (indoor ID65 filter) was used. A glass reactor, jacketed with cooling water at 25 °C, was placed inside the simulator, containing 250 mL of acetaminophen aqueous solution (5 mg·L$^{-1}$, unless otherwise noted) with the required dose of the photocatalyst (250 mg·L$^{-1}$). The photodegradation tests were preceded by an adsorption equilibrium step, carried out in darkness for 1 hour. Next, the reactor was irradiated with the solar simulated radiation, and aqueous samples were extracted at regular periods. The photocatalyst was removed by filtration over PTFE syringeless filters (Whatman, 0.2 μm) for HPLC analysis and PTFE syringe filters (Whatman, 0.45 μm) for Total Organic Carbon (TOC) and Ionic Chromatography (IC) analysis. The ACE concentration was quantified by high-performance liquid chromatography in a Shimadzu Prominence-i LC-2030C HPLC, equipped with a diode array detector (SPD-M30A). The stationary phase was a C18 Eclipse Plus column (4.6×150 mm, 5 μm, Agilent) kept at 40 ºC. A mixture of acetic acid solution (0.1% v/v)/acetonitrile was used as the mobile phase. A gradient 90/10-60/40% method (0.7 mL/min) was used for the quantification of ACE. The injection volume was 30 μL and the detection wavelength used was fixed to its maximum absorption at 246 nm. The lixiviation of the organic linkers in the reaction medium was determined by the same chromatographic method. ATA was quantified at 392 nm while the wavelength was set at 236 nm for ATA-C$_5$ and ATA-C$_6$. The tests were carried out in triplicate and the average was represented with a relative standard deviation lower than 5%. Quenching experiments were carried out with 2-propanol (1 mM) as HO$^\bullet$ quencher, oxalic acid (10 mM) to trap h+, p-benzoquinone (p-BQ) (0.02 mM), and tiron (1 mM) to quench O$_2^{\bullet-}$, and AgNO$_3$ (1 mM) as e$^-$ quencher. They were conducted following the same procedure above described with the addition of the chemical quencher after the previous adsorption of the catalyst and pH adjustment with NaOH/HCl solution to the initial pH of the blank test.

The byproducts formed during ACE degradation were identified by liquid chromatography coupled to electrospray ionization-mass spectrometry (LC-ESI-MS) in a Bruker MaXis-II instrument under ESI working in positive ionization. The acquisition conditions were as follows: 3500 V capillary voltage, 8 mL·min$^{-1}$ dry gas flow, dry heater at 300 °C, and 500 V endplate offset, *m/z* range from 50 to 3000. The short-chain carboxylic acids and inorganic ions were analyzed by ionic chromatography (IC) in a Metrohm 790 IC chromatograph, with a Metrosep A Supp column (4x250 mm), using Na$_2$CO$_3$/NaHCO$_3$ (3.2 mM/1.0 mM) solution as anionic eluent and 100 mM sulfuric acid as anionic suppressor at 0.7 mL·min$^{-1}$. The mineralization degree was measured by analyzing the total organic carbon (TOC) in a Shimazu TOC-L device.

**2. RESULTS AND DISCUSSION**

**2.2. Characterization of the *N*-cycloalkyl functionalized UiO-66-NH$_2$ materials**

The structure of the newly *N*-cycloalkyl functionalized UiO-66-NH$_2$ materials was identified and compared with that of the UiO-66-NH$_2$ pattern by XRD. As shown in **Figure 2,** UiO-66-NH$_2$ and UiO-66-NH-C$_5$ display the characteristic peaks of the UiO-66-NH$_2$ pattern, highlighting the most intense peaks at ca. 7.3 and 8.4º that correspond to the Miller planes (111) and (200), which confirm the successful crystallization of the UiO-66-NH$_2$ framework. The high similarity of both diffractograms indicates the formation of isoreticular structures, as reported previously for the functionalization with the same linkers for MIL-125. On the contrary, the XRD pattern of the UiO-66-NH-C$_6$ differs from the UiO-66-NH$_2$ and only a much wider and less intense peak is observed in the 7-9º region. This result suggests that the use of N-cyclohexyl-2-amino terephthalic acid as a linker disfavors the crystallization and results in a structure with low crystallinity and poor definition.

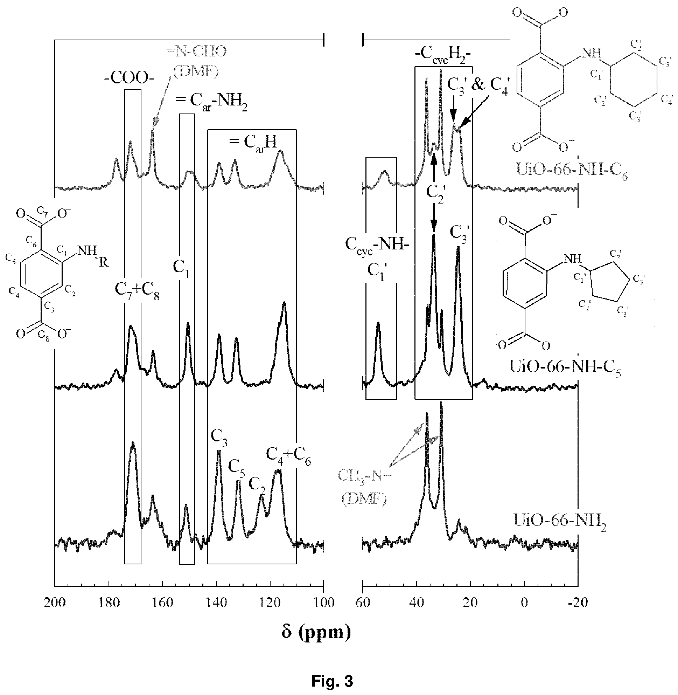

Solid-state NMR has been demonstrated to be a useful tool to unveil the structure of MOFs due to the presence of organic molecules in their structures. **Figure 3** depicts the $^{13}$C solid-state NMR spectra of the UiO-66-NH$_2$ and their *N*-cycloalkyl functionalized derivatives, in which two differenced regions can be observed. The peaks located at high chemical shifts, namely at c.a. 171, 151, 139, 132, and 117 ppm can be ascribed to aromatic carbon nuclei including the carbon nuclei within a carboxylic group or the carbon nuclei attached to the amino group, common to all synthesized materials. Concretely, the signal at 171 ppm was characteristic of C atoms from the carboxylic groups (-COO-, the sum of C7 and C8). The $C_{ar}$-$NH_2$ group (C1) appears at -151 ppm, while the signals at -139, -132, -123, and -117 ppm can be assigned to the C nuclei of the aromatic ring (C3, C5, C2 and the sum C4 and C6, respectively). In this region of high chemical shifts, a peak located at ca. 163.5 is observed in all the samples which can be explained by the presence of carbonyl groups such as in DMF (-N-CHO) occluded in the structure of the MOFs. In the region of low chemical shifts, the *N*-cycloalkyl functionalized samples displayed other new peaks associated with the carbon nuclei of the cycloalkyl rings. Hence, the signals at c.a. 54, 31, and 25 ppm (or 26+24 ppm) can be attributed to the carbon nuclei of the cycles linked to the amine group. In this region two peaks associated with DMF were detected, i.e. those located at 31 and 36 ppm, due to the $CH_3$-N= carbon nuclei of the solvent.

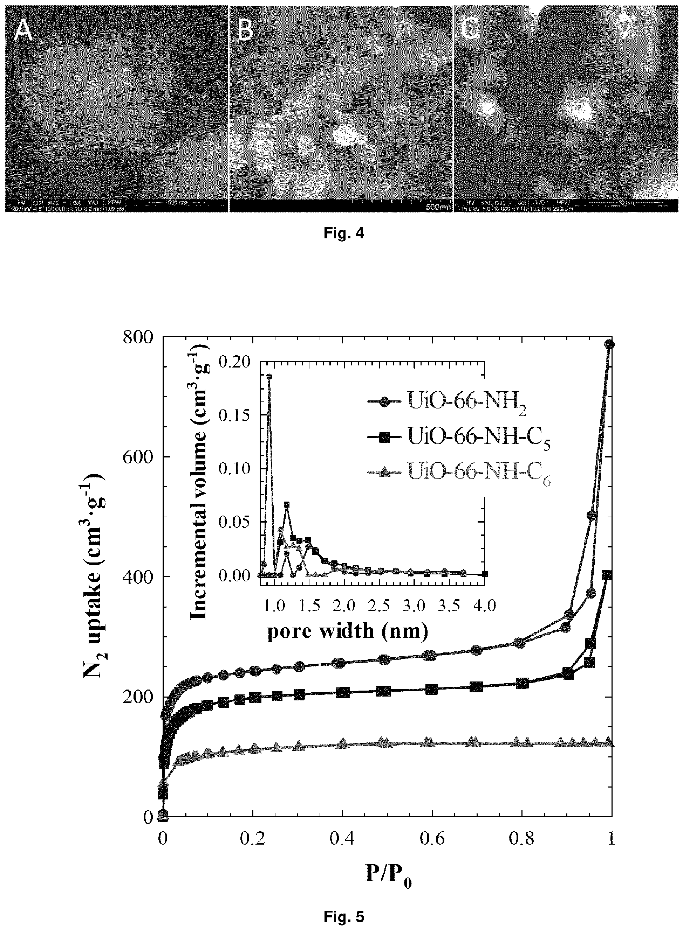

The SEM pictures displayed in **Figure 4** show different morphology and particle sizes for the different samples. UiO-66-$NH_2$ shows agglomeration of globular particles with a small size, an average of 30 nm. The morphology of UiO-66 is reported as well-defined octahedral nanoparticles of an average of 150-200 nm [W. Zhao, T. Ding, Y. Wang, M. Wu, W. Jin, Y. Tian, X. Li, Decorating Ag/AgCl on UiO-66-NH2: Synergy between Ag plasmons and heterostructure for the realization of efficient visible light photocatalysis, Chinese J. Catal. 40 (2019) 1187-1197]. Although UiO-66-$NH_2$ can show the octahedral structure of UiO-66 [ Y.L. Wang, S. Zhanb, Y.F. Zhab, J. Bedia, J.J. Rodriguez, C. Belver, UiO-66 based metal organic frameworks for the photodegradation of acetaminophen under simulated solar irradiation, J. Environ. Chem. Eng. 9 (2021) 106087; W. Zhao, T. Ding, Y. Wang, M. Wu, W. Jin, Y. Tian, X. Li, Decorating Ag/AgCl on UiO-66-NH2: Synergy between Ag plasmons and heterostructure for the realization of efficient visible light photocatalysis, Chinese J. Catal. 40 (2019) 1187-1197], it is also frequently observed with a certain deformation of the edges, displaying a morphology closer to a spherical geometry and lower particle size. The functionalization of the amino group with a cyclopentyl ring, i.e. UiO-66-NH-$C_5$, led to a structure consisting of an agglomeration of well-defined cubic-shape particles of uneven sizes within 50-120 nm. In the case of the UiO-66-NH-$C_6$, the morphology obtained was irregular, with no definition of particular geometry, and bigger size, i.e. over 1 μm. This lack of ordered morphology agrees well with the poor crystallinity of this sample observed in the XRD patterns **(Figure 2)**.

Figure 5 represents the $N_2$ adsorption-desorption isotherms of the samples and **Table 1** summarizes the characteristic parameters of the porous texture. According to IUPAC classification, the isotherms describe a Type II isotherm for UiO-66-$NH_2$ and UiO-66-NH-$C_5$, whereas UiO-66-NH-$C_6$ follows a Type I profile. All of them are characteristic of highly microporous materials. The hysteresis loop registered for UiO-66-$NH_2$ and UiO-66-NH-$C_5$ provides evidence of a certain contribution of mesoporosity. The specific BET surface areas **(Table 1)** decreased with increasing the volume of the *N*-cycloalkyl substitution, i.e. the areas follow the order UiO-66-$NH_2$>UiO-66-NH-$C_5$>UiO-66-NH-$C_6$. This behavior was also observed when analyzing the pore volumes. Based on the pore size distribution (Figure 5 inlet), most of the micropores of both *N*-cycloalkyl functionalized samples were located within 1.0-1.5 nm, with a maximum located at around 1.1 nm. However, UiO-66-$NH_2$ displayed a great amount of micropores of lower size, i.e. 0.8 nm, with minor contributions of micropores with sizes between 1.1 and 1.5 nm. These results suggest that the addition of extra substituents, such as the *N*-cycloalkyl, diminishes the accessibility to the pores due to the clogging of the pore and their apertures, as also reported in the literature for MIL-125 after functionalization in the amino group. However, regarding the proportion of micropores ($V_{MP}$/$V_T$), the tuning with *N*-cycloalkyl increases the micropore ratio due to the mentioned clogging effect.

**Table 1.** Characteristic parameters of the porous texture.

| Sample | $S_{BET}$ ($m^2 \cdot g^{-1}$) | $S_{MP}$ ($m^2 \cdot g^{-1}$) | $S_{EXT}$ ($m^2 \cdot g^{-1}$) | $S_{MP}$/$S_{BET}$ (%) | $V_T$ ($cm^3 \cdot g^{-1}$) | $V_{MP}$ ($cm^3 \cdot g^{-1}$) | $V_{MP}$/$V_T$ (%) |
|---|---|---|---|---|---|---|---|
| UiO-66-$NH_2$ | 798 | 585 | 213 | 73.3 | 1.218 | 0.281 | 23.1 |
| UiO-66-NH-$C_5$ | 655 | 458 | 198 | 70.0 | 0.623 | 0.218 | 35.0 |
| UiO-66-NH-$C_6$ | 371 | 229 | 144 | 61.7 | 0.190 | 0.109 | 56.8 |

$S_{BET}$: specific surface area; SMP, specific surface area of micropore; SEXT: specific external surface area; $V_T$: total pore volume; $V_{MP}$: volume of micropore.

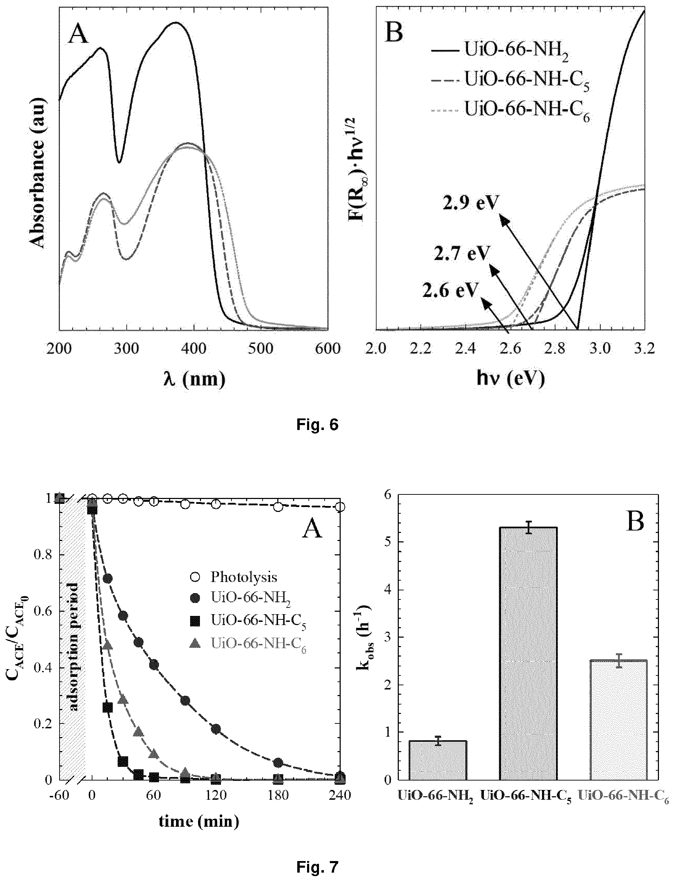

**Figure 6A** displays the UV-vis absorption profiles. UiO-66-$NH_2$ shows two characteristic absorption bands. The first one, whose maximum is located at 250 nm is attributed to the electronic transferences from O to Zr centers in the $[Zr_6O_4(OH)_4]$ metal oxocluster. The second band, with the maximum placed at 385 nm, is a consequence of the π-π electron transitions from the $NH_2$-based chromophores of the linker to the $[Zr_6O_4(OH)_4]$ cluster [ J. Long, S. Wang, Z. Ding, S. Wang, Y. Zhou, L. Huang, X. Wanga, Amine-functionalized zirconium metal-organic framework as efficient visible-light photocatalyst for aerobic organic transformations, Chem. Commun. 48 (2012) 11656-11658]. The *N*-cycloalkyl functionalized samples maintain similar absorption profiles to that of UiO-66-NH$_2$ in the UV region, with the same abovementioned bands although with lower intensities. Furthermore, the *N*-cycloalkyl-2-aminoterephtalate linkers generated red-shifted spectra, due to the presence of the alkyl donor group which is thought to destabilize the energy of the 2-aminoterephthalate. This fact results in inductive electron effects from the *N*-cycloalkyl chain to the amino group, with strong $\sigma$-bonds in its proximity that reduce the bandgap energy. The Tauc plot **(Figure 6B)** shows a decrease of the bandgap values **(Table** 2) by using N-cycloalkyl-2-aminoterephtalatic linkers, following the order: UiO-66-NH$_2$ > UiO-66-NH-C$_5$> UiO-66-NH-C$_6$.

**Table 2.** Optical and electronic properties.

| Sample | E$_g$ (eV) | V$_{FB (NHE, pH)}$ (V) | V$_{CB}$ (V) | V$_{VB}$ (V) |
|---|---|---|---|---|
| UiO-66-NH$_2$ | 2.9 | -0.80 | -0.62 | 2.28 |
| UiO-66-NH-C$_5$ | 2.7 | -0.80 | -0.66 | 2.04 |
| UiO-66-NH-C$_6$ | 2.6 | -0.80 | -0.68 | 1.92 |

E$_g$: bandgap energy; V$_{FB}$, flat band potential NHE corrected at pH=7; V$_{CB}$: conduction band potential; V$_{VB}$: valence band potential

### 2.3. Photocatalytic activity of the *N*-cycloalkyl-amino UiO-66-NH$_2$ photocatalysts

The photocatalytic activity was tested in the degradation of ACE in water. Since MOFs are porous structures with a potential ability towards adsorption of organics in aqueous solution, a 1 h adsorption step was carried out prior to the photocatalytic step. **Figure 7A** represents the time-course evolution of the normalized concentration of ACE during the photocatalytic degradation, while **Figure 7B** depicts the corresponding pseudo-first order rate constants. ACE adsorption was almost negligible with the three samples. It is also remarkable the high stability of ACE under irradiation in the absence of photocatalysts (photolysis). In the presence of UiO-66-NH$_2$ the ACE was completely degraded in 4 h with a pseudo-first order rate constant equal to 0.82 h$^{-1}$. The functionalization of the amino group with cycloalkyl rings led to a considerably improvement of the kinetics of ACE degradation. As compared in Figure 7B, UiO-66-NH-C$_5$ achieved a -5.5 times higher value of the kinetic constant than UiO-66-NH$_2$, reaching ACE complete degradation after only 1 h of irradiation. The functionalization with the cyclohexane ring also improved the UiO-66-NH$_2$ results, but in a lesser extent.

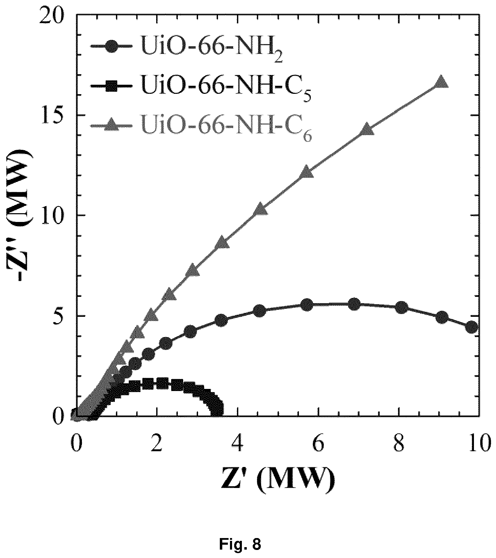

UiO-66-NH-C$_5$ displayed the best photo-activity results, but this is difficult to justify based on the crystal, textural and optical properties. To further explore the photocatalytic activity of UiO-66-NH-C$_5$ in the basis of charge mobility, electrochemical impedance spectroscopy (EIS) was applied. This technique analyzes the charge transfer resistance monitored on the surface of the MOF. **Figure 8** depicts the Nyquist curves in which the radius of the described semicircles follows the order UiO-66-NH$_2$ < UiO-66-NH-C$_6$ < UiO-66-NH-C$_5$. Since the diameters of the semicircles are equal to the electrical resistance of a sample, the smaller arc radius reflects a lower resistance suggesting, therefore, a decrease in the solid-state interface layer resistance and the charge transfer resistance across the solid-liquid junction on the surface. The electrical transfer resistance follows the order UiO-66-NH$_2$ < UiO-66-NH-C$_6$ < UiO-66-NH-C$_5$, in agreement with the inverse order of the photoactivity or degradation reaction rates. This suggest that the best results obtained with UiO-66-NH-C$_5$ can be justified by the lower charge transfer resistance and thus, the better mobility of charges in this sample.

### 2.4. Elucidation of the photocatalytic degradation mechanism

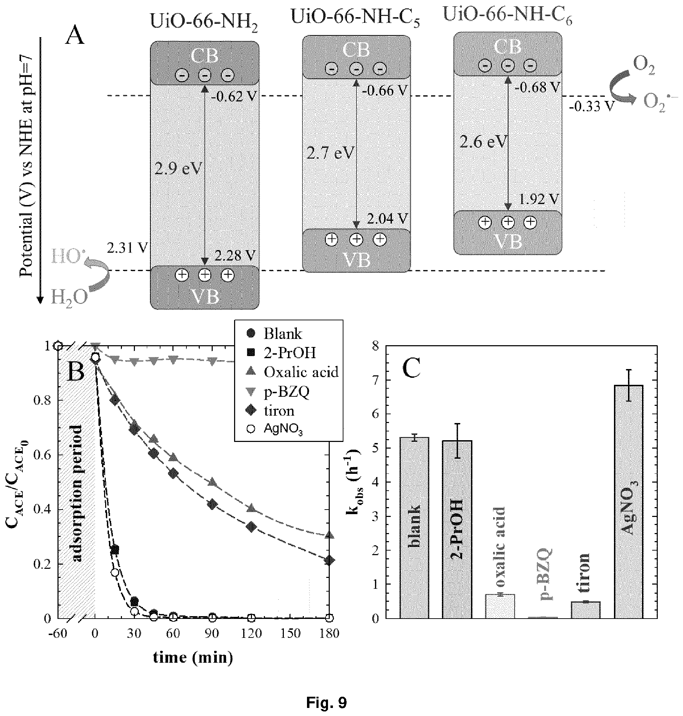

The scheme of the band energy alignments of bare and *N*-cycloalkyl functionalized photocatalysts is proposed in the **Figure 9A.** The flat band potential of the samples UiO-66-NH$_2$ was determined from the Mott-Schottky as -0.80 V after normalization to NHE scale at pH= 7. This value is very consistent with other reported in the literature for this MOF [ R.R. Solís, M. Peñas-Garzón, C. Belver, J.J. Rodriguez, J. Bedia, Highly stable UiO-66-NH2 by the microwave-assisted synthesis for solar photocatalytic water treatment, J. Environ. Chem. Eng. 10 (2022) 107122; M. Peñas-Garzón, M.J. Sampaio, Y.L. Wang, J. Bedia, J.J. Rodriguez, C. Belver, C.G. Silva, J.L. Faria, Solar photocatalytic degradation of parabens using UiO-66-NH2, Sep. Purif. Technol. 286 (2022) 120467]. The presence of *N*-cycloalkyl groups does not change the flat band value, and the redox potential of the conduction band was quite similar (see **Table 2).** The V$_{CB}$ value obtained in all synthesized samples are more negative than the redox potential of the pair O$_2$/O$_2$$^{•-}$, i.e. -0.33 V vs NHE at pH =7. Therefore, the formation of the superoxide is thermodynamically possible according to the proposed band alignment schemes. Nonetheless, the formation of hydroxyl radicals is not energetically plausible since the redox potential of the photogenerated holes are lower in all the cases than the required for the water molecule oxidation, i.e. H$_2$O/HO$^{•}$, +2.31 V vs NHE at pH =7.

Scavenger tests were carried out to tentatively elucidate the oxidant species involved in the photocatalytic degradation process of ACE with the UiO-66-NH-C$_5$. **Figure 9B** displays the scavengers influence evolution of ACE concentration during the photocatalytic degradation with UiO-66-NH-C$_5$ and **Figure 9C** the corresponding pseudo-first order rate constants. 2-PrOH is used as a HO$^\bullet$ scavenger, depicting no alteration on the kinetics of the ACE degradation, which pointed out the lack of influence of HO$^\bullet$ in the process. This fact is in accordance with the band alignments proposed in which all the potentials of valence bands with lower values than the required for the oxidation of H$_2$O molecules into HO$^\bullet$. The contribution of the holes was suppressed in the presence of oxalic acid (10 mM) which is oxidized by holes to produce CO$_2$. The addition of oxalic acid slowed down the ACE abatement, reducing the pseudo-first order rate constant at the beginning of the process over 7 times, which evidences the importance of the h$^+$ in the ACE degradation. For the suppression of the possible superoxide contribution, p-benzoquinone (p-BZQ) is frequently used although it also tends to directly trap electrons. The results obtained of ACE abatement in the presence of p-BZQ suggest a first step in which it may compete with the superoxide and photogenerated electrons involved in ACE degradation to latter trigger the ACE degradation after 1 h. In view of these inconclusive results, tiron was used as an alternative superoxide scavenger, leading. to almost 11 times decreased k$_{obs}$ for ACE degradation. This fact manifests that superoxide radical also contributes to the ACE degradation. Finally, Ag+ cation was used for testing the importance of photo-generated electrons. In the presence AgNO$_3$, no negative effect was registered. A slight acceleration, 30% increased k$_{obs}$, was appreciated. This partial enhancement on the kinetics has been also reported in previous works involving this scavenger and the explanation suggests an improvement due to the reduction of the electron-hole recombination rate.

## 2.5. Stability in water and reusability

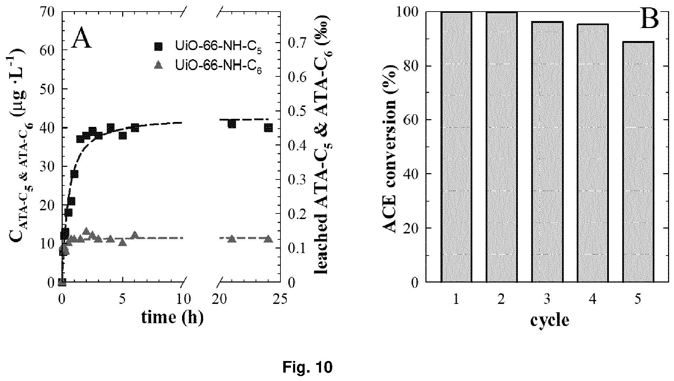

One of most critical aspects of MOFs applications is their stability in water. Water molecules can induce the collapse of certain MOFs structures because of the adsorption-desorption of these H$_2$O molecules can easily induce an elastic vibration of the ligands, leading them to break and eventually collapsing the whole structure. The stability of UiO-66 family has been assessed by the analysis of the possible leached metal or linker into water. For instance, the release of Zr$^{4+}$ by UiO-66 in water has been reported undetectable, except under extreme concentrations of buffer in which the structure tends to collapse. Besides, UiO-66-NH$_2$ displays a very high stability in water with almost negligible lixiviation of ATA in a wide range of pH range. On this basis, the stability of the *N*-cycloalkyl functionalized UiO-66-NH$_2$ materials reported in this work was analyzed by the quantification of the linker lixiviation, i.e. ATA-C$_5$ and ATA-C$_6$, for 24 hours at natural pH. As shown in **Figure 10A,** the lixiviation of ATA-C$_5$ from UiO-66-NH-C$_5$ and ATA-C$_6$ from UiO-NH-C$_6$ are minimal and in the range of $\mu$g·L$^{-1}$. Considering the percentage of leached linker with respect to the linker constituting the MOF structure, only 0.44‰ of ATA-C$_5$ and 0.13‰ of ATA-C$_6$ is detected, values in accordance with the 0.20‰ already reported for UiO-66-NH$_2$ [ R.R. Solís, M. Peñas-Garzón, C. Belver, J.J. Rodriguez, J. Bedia, Highly stable UiO-66-NH2 by the microwave-assisted synthesis for solar photocatalytic water treatment, J. Environ. Chem. Eng. 10 (2022) 107122].

Based on the photocatalytic performance, UiO-66-NH-C$_5$ was selected for a study of photocatalytic activity with sequential reusing cycles. **Figure 10B** shows the ACE conversion at 3 h of treatment during 5 consecutive cycles of reuse. UiO-66-NH-C$_5$ performs a very stable activity with a slight loss in the last run, less than 10% and attributable to the catalyst loss during recuperation between runs.

## 2.6. Photocatalytic degradation pathway of acetaminophen

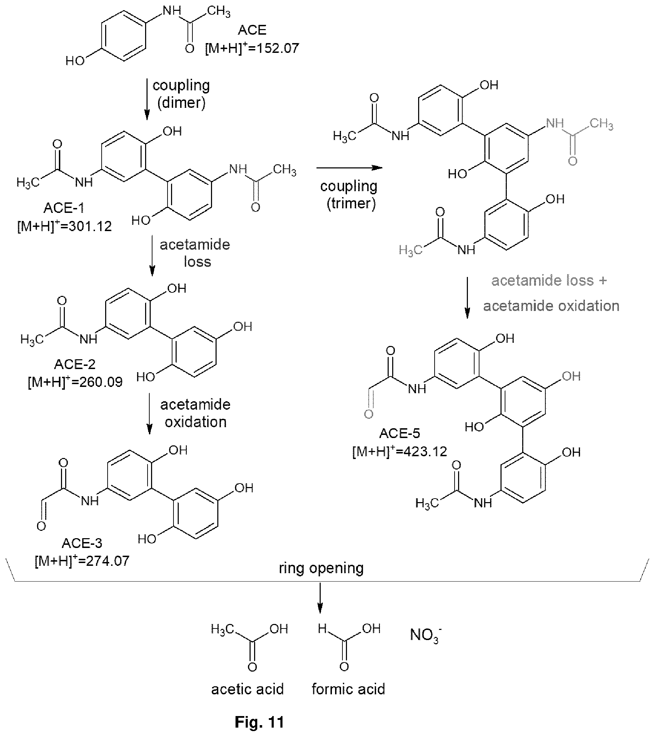

The intermediates generated during the photocatalytic abatement of ACE were tentatively identified by liquid chromatography coupled to electrospray ionization-mass spectrometry, at an ACE initial concentration of 100 mg·L$^{-1}$ using the most photoactive MOF sample, UiO-66-NH-C$_5$. The suggested degradation pathway is depicted in **Figure 11.** The direct oxidation of ACE by hydroxylation is usually expected if the HO$^\bullet$ is the main oxidant species involved in the process leading to the oxidation either of the aromatic ring or the attack to the amino alkyl chain of ACE. In the oxidation of ACE over UiO-66-NH-C$_5$, in which the oxidation of H$_2$O to HO$^\bullet$ has been discarded, this route was not observed. Instead, the photogenerated holes led to a coupling pathway of ACE molecules to produce dimer and trimer forms, as it has been reported in the literature. It is thought that a radical coupling of ACE phenoxyl radical with another ACE molecule, is induced by the h$^+$ through one electron oxidation of ACE. As the importance of the photogenerated holes has been previously demonstrated, it is likely that the photocatalytic abatement of ACE involves the initial formation of dimers and trimer species.

Two dimer isomers from the coupling of ACE were detected, ACE-1, as previously reported in the photodegradation of this compound over TiO$_2$ or UiO-66-NH$_2$. Although two isomers can be proposed, the polymerization of ACE molecules is expected to take place, preferentially, over the *ortho* position respect to the hydroxyl group, and to a lesser extent, between the carbon *ortho* to the hydroxyl group and the amino group of another acetaminophen molecule. The ACE-1 underwent consequent transformations, triggering the formation of intermediates by two plausible routes.

Firstly, the loss of one of the acetamide group of ACE-1 followed by hydroxylation, triggered the formation of ACE-2, which can also be oxidized in the N-amino methyl chain to launch the formation of the corresponding aldehyde, ACE-3. The second route of ACE-1 reaction was the further coupling of the dimer ACE-1 with other ACE molecule, leading to the trimer ACE-4, whose detection led to the monitoring of three plausible isomers. Also, the degradation of ACE-4 with an acetamide loss and an oxidation in other acetamide group, namely ACE-5, was observed.

## 3. CONCLUSIONS

This work is an example of the versatility and huge opportunities than MOFs can supply, such as the possibility of modifying the linker structure before the MOF synthesis, improving, consequently, the optoelectronic properties of the material. In this case, UiO-66-NH$_2$ was successfully prepared with a previously N-cycloalkyl functionalized terephthalic acid molecule for the first time. The functionalization of the linker led to a decreased of the bandgap energy and improved the migration of the photo-generated charges. Although the bandgap followed the order UiO-66-NH$_2$>UiO-66-NH-C$_5$>UiO-66-NH-C$_6$, the sample UiO-66-NH-C$_5$ displayed less electrical resistance, therefore, better mobility of charges. These optoelectronic differences explained the outstanding photocatalytic activity in the acetaminophen removal in water. The determination of the conduction band energy, and the proposal of bands alignment, discharged the plausible role paid by the hydroxyl radicals, confirmed by scavenger test. Instead, the main role of both photogenerated holes and superoxide radicals was confirmed. Both N-cycloalkyl functionalized MOFs were very stable in water with almost no detectable linker leaching, i.e. lower than 0.5‰, and the UiO-66-NH-C$_5$ and maintaining a high photocatalytic activity during sequential reusing cycles. The identified transformation products were the results of a coupling route in which dimers and trimers of acetaminophen are formed to be further oxidized, as confirmed the formation of short chain organic acids (formic and acetic acids) and the evolution of the mineralization degree.

**Claims**

1.   A metal-organic framework (MOF) comprising N-cycloalkyl functionalized UiO-66-NH$_2$ wherein the cycloalkyl substituent is selected from cyclopentyl and cyclohexyl.

2.   A metal-organic framework, according to claim 1, comprising N-cyclopentyl functionalized UiO-66-NH$_2$

3.   A metal-organic framework, according to claim 1 or 2, comprising a micropore volume from 35 to 60 % wherein the micropores have a diameter size between 1.0-1.5 nm.

4.   A metal-organic framework, according to any of claims 1 to 3, having a BET surface area from 300 to 700 m$^2 \cdot$g$^{-1}$.

5.   Procedure to prepare the metal-organic framework described in any of previous claims, that comprises the next steps:

   a) synthesis of N-cycloalkyl-2-aminoterephthalate dimethyl ester by contacting 2-aminoterephthalate dimethyl ester with the corresponding cyclic ketone: cyclopentanone or cyclohexanone, in presence of trimethylsilyl chloride (TMSCl), adding NaBH$_4$ at 0 ºC to the mixture of reaction and , after 2 to 10 min of the addition of NaBH$_4$, warming up said mixture to room temperature and maintaining the mixture at said temperature for 2 to 4 h,
   b) synthesis of N-cycloalkyl-2-aminoterephthalic acid by treating the N-cycloalkyl-2-aminoterephthalate dimethyl ester obtained in step a) with NaOH at a temperature between 60 and 80 ºC for 6-10 h; the mixture was concentrated to remove the solvent, the resulting mixture is acidified, and the precipitate formed, which contains the N-cycloalkyl-2-aminoterephthalic acid, is collected,
   c) synthesis of the N-cycloalkyl-amino functionalized UiO-66-NH$_2$ by contacting the N-cycloalkyl-2-aminoterephthalic acid obtained in step b) with ZrOCl$_2 \cdot$8 H$_2$O in presence of acetic acid and HCl in a vessel hermetically closed and heated at a temperature between 130 and 150 ºC for 14-20 h.

6.   Procedure, according to claim 5, wherein, DMF is used as a solvent in step a) and/or in step b).

7.   Procedure, according to claim 5 or 6, wherein the step b) is carried out at 70 °C and/or for 8 h.

8.   Procedure, according to any of previous claims 5 to 7, wherein, in step b), the mixture is acidified until pH 3.

9.   Procedure, according to any of previous claims 5 to 8, wherein the precipitate in step b) is isolated by filtration, washed with water, and dried.

**10.** Procedure according to any of previous claims 5 to 9, wherein step c) is carried out at 140 ºC and/or for 16 h.

**11.** Procedure according to any of previous claims 5 to 10, wherein for each mmol of 2-aminoterephthalate dimethyl ester used in step a), between 1 and 2mmol of cyclic ketone and/or between 2 and 3 mmol of trimethylsilyl chloride (TMSCI) and/or between 1 and 1.5 mmol of $NaBH_4$ are used.

**12.** Use of the metal-organic framework described in any of claims 1 to 4, as a photocatalyst.

**13.** Use according to claim 12 in the degradation of organic contaminants in water.

**14.** Use according to claim 13 wherein the degradation is carried out in presence of solar light as an energy source.

**15.** Use according to claim 13 or 14 wherein the organic contaminant is acetaminophen.

**Fig. 1**

**Fig. 2**

**Fig. 3**

**Fig. 4**

**Fig. 5**

Fig. 6

Fig. 7

Fig. 8

Fig. 9

Fig. 10

**Fig. 11**

# EUROPEAN SEARCH REPORT

Europäisches Patentamt
European Patent Office
Office européen des brevets

**Application Number**

EP 22 38 2704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WANG Y.L. ET AL: "UiO-66-based metal organic frameworks for the photodegradation of acetaminophen under simulated solar irradiation", JOURNAL OF ENVIRONMENTAL CHEMICAL ENGINEERING, vol. 9, no. 5, 21 July 2021 (2021-07-21), page 106087, XP093013372, NL ISSN: 2213-3437, DOI: 10.1016/j.jece.2021.106087 * abstract * * 1.Introduction; page 2, left-hand column * * 2.2. Preparation of metal -organic frameworks; page 2 * * 3. Results and discussion, 3.1. Characterization; page 3, right-hand column * * figures 1,10 * * 3.2. Photocatalytic degradation tests; page 5 – page 7 * ----- -/-- | 1-4, 12-15 | INV. B01J20/22 B01J20/30 C02F1/28 C02F1/72 B01J31/16 |

**TECHNICAL FIELDS SEARCHED (IPC)**

B01J
C02F

The present search report has been drawn up for all claims

| Place of search | Date of completion of the search | Examiner |
|---|---|---|
| The Hague | 17 January 2023 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

## EUROPEAN SEARCH REPORT

**Application Number**

EP 22 38 2704

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | MATTHEW W. LOGAN ET AL: "Systematic variation of the optical bandgap in titanium based isoreticular metal?organic frameworks for photocatalytic reduction of CO 2 under blue light", JOURNAL OF MATERIALS CHEMISTRY A, vol. 5, no. 23, 1 January 2017 (2017-01-01), pages 11854-11863, XP055544526, GB ISSN: 2050-7488, DOI: 10.1039/C7TA00437K * Introduction; page 11854 – page 11855 * * Synthesis of N-cycloalkyl-2amino-terephthalate dimethyl ester (1e, 1f); page 11856, right-hand column – page 11857, left-hand column * * Scheme 1; page 11857 * * Photochemical reduction of carbon dioxide to formate; page 11857, right-hand column * ----- | 1-15 | |
| Y | FENG YI ET AL: "Defect-Tailoring and Titanium Substitution in Metal-Organic Framework UiO-66-NH 2 for the Photocatalytic Degradation of Cr(VI) to Cr(III)", ACS APPLIED NANO MATERIALS, vol. 2, no. 9, 22 August 2019 (2019-08-22), pages 5973-5980, XP093014594, ISSN: 2574-0970, DOI: 10.1021/acsanm.9b01403 * 2. Experimental Section; page 5974 * * Scheme 1; page 5974 * ----- -/-- | 5-11 | **TECHNICAL FIELDS SEARCHED (IPC)** |

The present search report has been drawn up for all claims

| Place of search | Date of completion of the search | Examiner |
|---|---|---|
| The Hague | 17 January 2023 | Kaluza, Nicoleta |

Europäisches
Patentamt

European
Patent Office

Office européen
des brevets

## EUROPEAN SEARCH REPORT

Application Number

EP 22 38 2704

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GÓMEZ-AVILÉS A. ET AL: "Mixed Ti-Zr metal-organic-frameworks for the photodegradation of acetaminophen under solar irradiation", APPLIED CATALYSIS B. ENVIRONMENTAL, vol. 253, 1 September 2019 (2019-09-01), pages 253-262, XP093013561, AMSTERDAM, NL ISSN: 0926-3373, DOI: 10.1016/j.apcatb.2019.04.040 * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 17 January 2023 | Kaluza, Nicoleta |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **J. GASCON ; A. CORMA ; F. KAPTEIJN ; F.X. LLABRÉS ; I XAMENA.** Metal organic framework catalysis: quo vadis?. *ACS Catal,* 2014, vol. 4, 361-378
- **J.H. CAVKA ; S. JAKOBSEN ; U. OLSBYE ; N. GUILLOU ; C. LAMBERTI ; S. BORDIGA ; K.P. LILLERUD.** A new zirconium inorganic building brick forming metal organic frameworks with exceptional stability. *J. Am. Chem. Soc.,* 2008, vol. 130, 13850-13851
- **WINARTA ; B. SHAN ; S.M. MCINTYRE ; L. YE ; C. WANG ; J. LIU ; B. MU.** A Decade of UiO-66 Research: A Historic review of dynamic structure, synthesis mechanisms, and characterization techniques of an archetypal Metal-Organic Framework. *Cryst. Growth Des,* 2020, vol. 20, 1347-1362
- **Y.L. WANG ; S. ZHANB ; Y.F. ZHAB ; J. BEDIA ; J.J. RODRIGUEZ ; C. BELVER.** UiO-66 based metal organic frameworks for the photodegradation of acetaminophen under simulated solar irradiation. *J. Environ. Chem. Eng.,* 2021, vol. 9, 106087
- **X. CHEN ; Y. CAI ; R. LIANG ; Y. TAO ; W. WANG ; J. ZHAO ; X. CHEN ; H. LI ; D. ZHANG.** NH2-UiO-66(Zr) with fast electron transfer routes for breaking down nitric oxide via photocatalysis. *Appl. Catal. B Environ.,* 2020, vol. 267, 118687
- **M.W. LOGAN ; S. AYAD ; J.D. ADAMSON ; T. DILBECK ; K. HANSON ; F.J. URIBE-ROMO.** Systematic variation of the optical bandgap in titanium based isoreticular metal-organic frameworks for photocatalytic reduction of CO2 under blue light. *J. Mater. Chem. A.,* 2017, vol. 5, 11854-11863
- *CHEMICAL ABSTRACTS,* 1260119-00-3
- **T. MUSHO ; J. LI ; N. WU.** Band gap modulation of functionalized metal-organic frameworks. *Phys. Chem. Chem. Phys.,* 2014, vol. 16, 23646-23653
- **T.F. CHEN ; S.Y. HAN ; Z.P. WANG ; H. GAO ; L.Y. WANG ; Y.H. DENG ; C.Q. WAN ; Y. TIAN ; Q. WANG ; G. WANG.** Modified UiO-66 frameworks with methylthiol, thiol and sulfonic acid function groups: The structure and visible-light-driven photocatalytic property study. *Appl. Catal. B Environ.,* 2019, vol. 259, 118047

- **P. MAKULA ; M. PACIA ; W. MACYK.** How to correctly determine the band gap energy of modified semiconductor photocatalysts based on UV-Vis Spectra. *J. Phys. Chem. Lett.,* 2018, vol. 9, 6814-6817
- **M. ZEAMA ; M. MORSY ; S. ABDEL-AZEIM ; M. ABDELNABY ; A. ALLOUSH ; Z. YAMANI.** Photophysical and photocatalytic properties of structurally modified UiO-66. *Inorganica Chim. Acta.,* 2020, vol. 501, 119287
- **K. GELDERMAN ; L. LEE ; S.W. DONNE.** Flat-band potential of a semiconductor: using the mott-schottky equation. *J. Chem. Educ.,* 2007, vol. 84, 25
- **T. GIANNAKOPOULOU ; I. PAPAILIAS ; N. TODOROVA ; N. BOUKOS ; Y. LIU ; J. YU ; C. TRAPALIS.** Tailoring the energy band gap and edges' potentials of g-C3N4/TiO2 composite photocatalysts for NOx removal. *Chem. Eng. J,* 2017, vol. 310, 571-580
- **W. ZHAO ; T. DING ; Y. WANG ; M. WU ; W. JIN ; Y. TIAN ; X. LI.** Decorating Ag/AgCl on UiO-66-NH2: Synergy between Ag plasmons and heterostructure for the realization of efficient visible light photocatalysis. *Chinese J. Catal.,* 2019, vol. 40, 1187-1197
- **J. LONG ; S. WANG ; Z. DING ; S. WANG ; Y. ZHOU ; L. HUANG ; X. WANGA.** Amine-functionalized zirconium metal-organic framework as efficient visible-light photocatalyst for aerobic organic transformations. *Chem. Commun.,* 2012, vol. 48, 11656-11658
- **R.R. SOLÍS ; M. PEÑAS-GARZÓN ; C. BELVER ; J.J. RODRIGUEZ ; J. BEDIA.** Highly stable UiO-66-NH2 by the microwave-assisted synthesis for solar photocatalytic water treatment. *J. Environ. Chem. Eng.,* 2022, vol. 10, 107122
- **M. PEÑAS-GARZÓN ; M.J. SAMPAIO ; Y.L. WANG ; J. BEDIA ; J.J. RODRIGUEZ ; C. BELVER ; C.G. SILVA ; J.L. FARIA.** Solar photocatalytic degradation of parabens using UiO-66-NH. *Sep. Purif. Technol.,* 2022, vol. 286, 120467